# EUROPEAN PATENT APPLICATION

(11) **EP 3 034 874 A1**
(43) Date of publication of application: **22.06.2016**
(21) Application number: 14307097.7
(22) Date of filing: 19.12.2014
(51) Int. Cl.: F04B 27/08, F04B 27/10, F04B 35/01, F04B 39/00, F16H 55/36

(54) **Refrigerant compressor**

(71) Applicant: VALEO SYSTEMES THERMIQUES, 78320 Le Mesnil Saint-Denis (FR); Valeo Klimasysteme GmbH, 96476 Bad Rodach (DE); Valeo Compressors S.R.O., 396.01 Humpolec (CZ)
(72) Inventor: FIENE, Andreas, 67127 RODERSHEIM-GRONAU (DE); LI, Li, 65510 IDSTEIN (DE); MEURILLON, Paul, 95240 CORMEILLES-EN-PARISIS (FR); CERVENY, David, 580 01 HAVLICKUV BROD (CZ)
(74) Representative: Pellegrini, Marie Claude

(57) **Abstract**

A refrigerant compressor (10) for an air conditioning system is described, in particular for a vehicle, having a drive pulley (12), a compressor shaft (16) to which the drive pulley (12) is operatively connected, and an inertia mass (20) which is directly connected to the compressor shaft (16).

## Description

The invention relates to a refrigerant compressor for an air conditioning system, in particular for a vehicle, having a drive pulley, a compressor shaft to which the drive pulley is operatively connected.

A refrigerant compressor of this type is known from DE 102 54 937 A1. The pulley is connected via a torque limiter to the hub which in turn is connected to the compressor shaft.

The object of the invention is to reduce noise which results from excitation from a motor driving the compressor and from rotational belt imbalances. The object of the invention is further to shift the resonance frequency of the compressor to a frequency range which is different from the range of excitation frequencies to which the compressor is subjected and which result from the drive rotating the pulley.

In order to solve this object, the invention provides a refrigerant compressor of the type mentioned above, which is characterized in that an inertia mass is provided which is directly connected to the compressor shaft. The invention is based on the recognition that a favorable effect can be provided by using an inertia wheel which is directly connected to the compressor shaft. This allows to directly increase the inertia of the compressor shaft without incurring any additional load on the hub. Furthermore, any tolerances and potential imbalance introduced by the hub is avoided. Furthermore, the inertia of the inertia mass does not result in an additional load acting on the connection between the compressor shaft and the hub.

According to a preferred embodiment, the inertia mass is an inertia wheel. An inertia wheel allows introducing a high additional inertia while requiring only a small space. The additional inertia provided by the inertia wheel can be of 200 to 800 kg*mm².

According to an embodiment of the invention, a press fit connection is provided between the compressor shaft and the inertia mass. This type of connection is advantageous as it provides a good centering effect of the inertia mass with respect to the compressor shaft.

According to an alternative embodiment, an adhesive connection can be provided between the compressor shaft and the inertia mass.

According to a still further embodiment, a mechanical connection is provided between the compressor shaft and the inertia mass. Using a mechanical connection is advantageous as it allows an easy disassembling of the inertia mass from the compressor shaft.

The mechanical connection can be formed by a thread on the compressor shaft, onto which the inertia mass is threaded. This results in a very simple mounting process.

It is however more preferred to have the mechanical connection which provides for a positive fit regarding a rotation of the inertia mass relative to the compressor shaft. Examples for such positive fit are a pin which prevents a relative rotation of the inertia mass with respect to the compressor shaft, or a spring. This type of mechanical connection ensures that there will be no rotation of the inertia mass relative to the compressor shaft despite any vibrations which might occur.

Another advantageous embodiment consists in the mechanical connection being a spline connection between the inertia mass and the compressor shaft, which is advantageous as it allows to reliably transmit high torques.

For all embodiments using a positive, non-rotatable connection between the inertia mass and the compressor shaft, there is the significant advantage that there is no risk of the inertia disk becoming detached from the compressor shaft as the result of torsional vibrations which during operation of the compressor act on the connection between the inertia disk and the compressor shaft. The same is true in case of a high torque which can act between the compressor shaft and the inertia disk in case of abrupt changes of the rotational speed of the compressor shaft.

Preferably, a fixation is provided for securing the inertia mass. The fixation provides additional security against unintentional rotation of the inertia mass with respect to the compressor shaft or against unintentional disintegration. The fixation can for example be formed by a counter screw. It is also possible to form the fixation by an adhesive. Still further, the fixation can be formed by a mechanical formation such as a spring element, a pin, a tooth profile or a counter screw.

According to a preferred embodiment of the invention, the inertia mass is mechanically centered to the hub. This reduces the risk of an imbalance of the inertia mass, in particular if the connection between the inertia mass and the compressor shaft does in itself not provide for a centering effect.

Preferably, the inertia mass has a shoulder which engages at an associated surface of the hub. This structure can be used for automatically centering the inertia mass with respect to the hub and hence the compressor shaft when the inertia mass is being mounted to the compressor shaft.

Preferably, the inertia mass has a rotational inertia of 200 to 800 kg*mm². This range has proven to be a good compromise between a good effect of the inertia mass on the one hand and a reasonable weight of it at the other hand.

The invention will now be described with reference to different embodiments, which are shown in the enclosed drawings. In the drawings,
- Figure 1 schematically shows a refrigerant compressor according to the invention;
- Figure 2 shows a cross section through the end of the compressor shaft where the drive pulley and the inertia mass are being arranged;
- Figure 3 shows a perspective view of an inertia mass according to an alternative construction; and
- Figure 4 shows the central part of the inertia mass of Figure 3 at an enlarged scale.

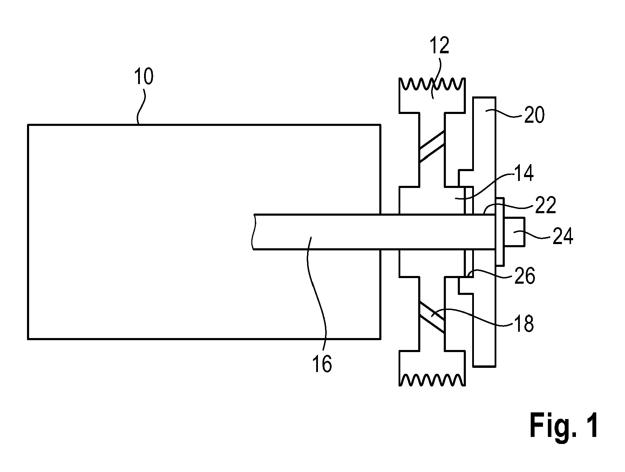

Figure 1 shows a refrigerant compressor 10 which can be in particular used in a vehicle as part of an air conditioning system. By operating the refrigerant compressor, a refrigerant provided at the suction side of the compressor is compressed and discharged at a higher pressure at the output side.

Refrigerant compressor 10 is externally driven. For driving the compressor, a drive pulley 12 is provided at which a belt drive (not shown) engages. The belt drive can be connected to a motor of the vehicle or to a different mechanism dedicated explicitly for driving the refrigerant compressor.

The rotary motion of drive pulley 12 is transmitted to a hub 14 which is non-rotatably connected to a compressor shaft 16.

In practice, additional means such as vibration dampers or a torque limiter are provided between drive pulley 12 and hub 14. As they are not relevant here, they are only schematically indicated with reference numeral 18.

Compressor shaft 16 drives the mechanism of refrigerant compressor 10 which compresses the refrigerant. As an example, compressor shaft 16 can drive a swash plate which is connected to pistons such that a rotary motion of the swash plate is transformed into a reciprocating motion of the pistons.

In order to ensure a smoother rotation of compressor shaft 16, an inertia mass 20 is connected non-rotatably to compressor shaft 16. Inertia mass 20 is here formed as an inertia disk. It can be formed as a single, integral piece or could be formed as a composite part consisting of two or more elements.

Preferably, inertia mass 20 is made from steel and has a rotational inertia of 200 to 800 kg*mm².

As can be seen in Figure 1, inertia mass 20 is directly connected to compressor shaft 16. To this end, compressor shaft 16 extends through hub 14 and beyond the hub so that there is a free forward end of the compressor shaft to which inertia mass 20 can be directly connected. Having inertia mass 20 act directly on compressor shaft 16 ensures that there are no intermediate elements which are stressed by the damping effect which inertia mass 20 exerts on compressor shaft 16.

Inertia mass 20 is connected to compressor shaft 16 by a connection which prevents a relative rotation between the two elements. This connection is schematically depicted in Figure 1 with reference numeral 22.

One example for such connection between the compressor shaft and the inertia mass is a press fit which ensures that there is sufficient frictional contact between a central bore of inertia mass 20 and the outer surface of compressor shaft 16. The press fit can be obtained by a slight taper on compressor shaft 16, onto which inertia mass 20 is pressed in an axial direction, or by heating inertia mass 20 and arranging it in a heated condition on compressor shaft 16. The advantage of a press fit is that there is no risk of detachment if the torque acting between the inertia disk and the compressor shaft exceeds the level of torque which can be transmitted between disk and shaft. Should such condition occur, there simply is some slippage and rotation of the inertia disk relative to the compressor shaft until the acting torque drops below the design torque.

Another example for connection 22 between compressor shaft 16 and inertia mass 20 is an adhesive connection. For such connection, inertia mass 20 is preferably provided with a cylindrical central surface which extends over a certain axial length so as to provide a sufficiently large surface area for forming the adhesive connection.

Another example for connection 22 is a mechanical connection between the compressor shaft and the inertia mass. Mechanical connection 22 can be a thread on compressor shaft 16, onto which inertia mass 20 is threaded.

More preferably, the mechanical connection is a splined connection which uses cooperating splines in a central opening of inertia mass 20 and on outer surface of compressor shaft 16. Mechanical connection 22 can also be formed by a pin, a keying element or a spring which prevents relative rotation between compressor shaft 16 and inertia mass 20.

Using a mechanical connection which prevents, by interengaging structures which provide a positive mechanical connection between the shaft and the disk, any rotation of the inertia disk relative to the compressor shaft has some advantages. During operation of the compressor, torsional vibrations almost permanently act on the connection between the inertia disk and the compressor shaft. These torsional vibrations are the consequence from fluctuations in the torque produced by the combustion engine driving the compressor and from a certain elasticity in the drive from the combustion engine to the compressor. On top of torque fluctuations, any change of the speed of the compressor also results in a torque load on the connection from the compressor shaft to the inertia disk. Using a mechanical connection such as splines, keys, pins etc. allows to reliably transmit the torque between the disk and the shaft over a long lifetime.

In addition to connection 22, a fixation 24 is provided which acts as a security means. In other words, the purpose of fixation 24 is to ensure that connection 22 remains intact.

Fixation 24 can be formed by a counter screw which provides an additional fixation effect. Fixation 24 can also be formed by an adhesive which is for example applied to a threaded connection between compressor shaft 16 and inertia mass 20. Fixation 24 can also be formed by a mechanical element such as a spring, a pin or a tooth profile, for example at a stop shoulder on compressor shaft 16 against which inertia mass 20 is threaded.

In order to improve the centering of inertia mass 20 with respect to compressor shaft 16, a mechanical centering of inertia mass 20 is provided which is independent from any centering or positioning effect achieved by connection 22. In Figure 1, it can be seen that inertia mass 20 is provided with a shoulder 26 at its side facing hub 14, which engages at an associated circular surface of hub 14. Shoulder 26 and the corresponding surface of hub 14 are formed with such tolerances that inertia mass 20 is precisely centered by cooperation of these surfaces, resulting in inertia mass 20 being precisely centered with respect to compressor shaft 16.

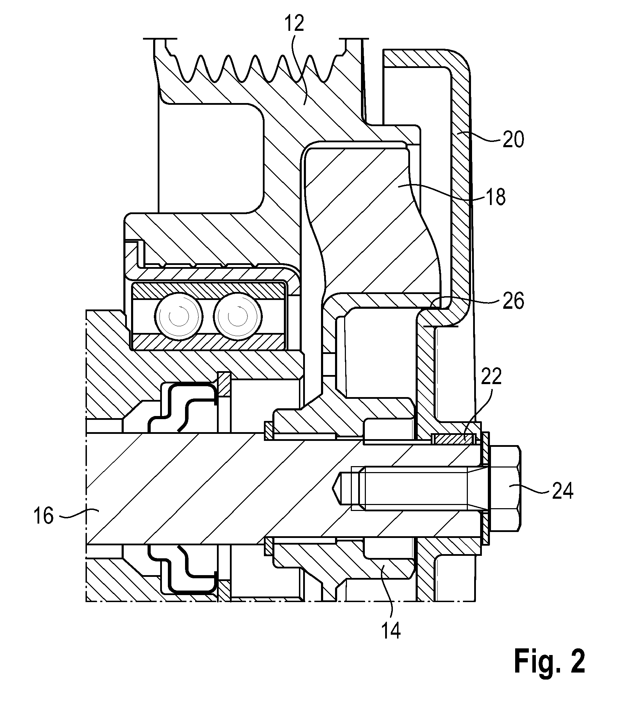

Details of the arrangement of inertia mass 20 at compressor shaft 16 can be seen in Figure 2. In Figure 2, hub 14 can be seen which is arranged on compressor shaft 16. Compressor shaft 16 extends through and beyond hub 14 so that there is a free end at which inertia mass 20 is arranged. Connection 22 is here formed by a spring element which ensures a non-rotatable connection between compressor shaft 16 and inertia mass 20 by engaging into a groove in compressor shaft 16 on the one hand, and a corresponding recess in inertia mass 20 on the other hand. Fixation 24 is here formed by a counter screw which prevents that inertia mass 20 is separated from compressor shaft 16 in an axial direction.

The proper position of inertia mass 20 with respect to compressor shaft 16 is ensured by shoulder 26 on inertia mass 20, which here internally engages at a corresponding surface of hub 14.

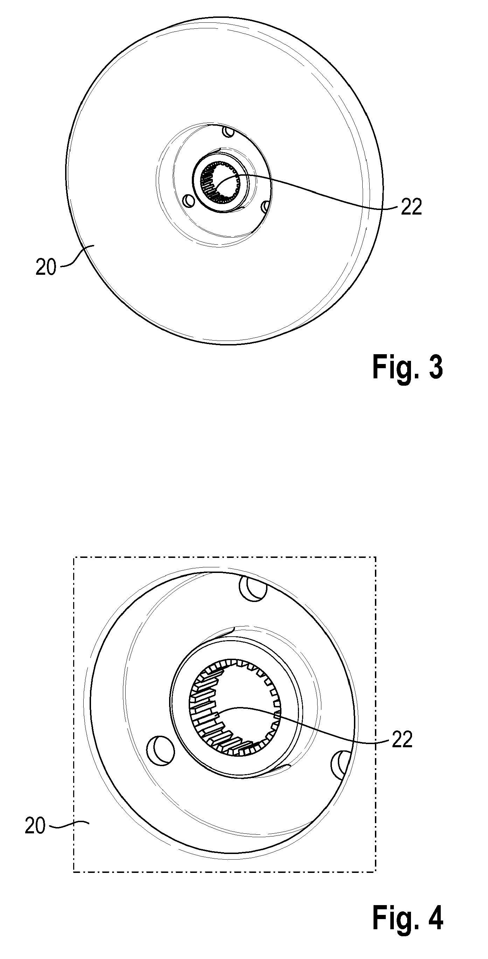

In Figures 3 and 4, an alternative construction of inertia mass 20 is shown, with the difference to the embodiment of Figure 2 being that connection 22 is here formed by splines which are provided along the inner opening of inertia mass 20. Compressor shaft 16 has complementary splines which receive inertia mass 20. A counter screw can be used as fixation 24 for ensuring that inertia mass 20 is properly kept at its location on compressor shaft 16.

## Claims

1. A refrigerant compressor (10) for an air conditioning system, in particular for a vehicle, having a drive pulley (12), a compressor shaft (16) to which the drive pulley (12) is operatively connected, **characterized in that** it comprises an inertia mass (20) directly connected to the compressor shaft (16).

2. The compressor as defined in claim 1 wherein the inertia mass (20) is an inertia disk.

3. The compressor as defined in claim 1 or claim 2 wherein a press fit connection (22) is provided between the compressor shaft (16) and the inertia mass (20).

4. The compressor as defined in claim 1 or claim 2 wherein an adhesive connection (22) is provided between the compressor shaft (16) and the inertia mass (20).

5. The compressor as defined in claim 1 or claim 2 wherein a mechanical connection (22) is provided between the compressor shaft (16) and the inertia mass (20).

6. The compressor as defined in claim 5 wherein the mechanical connection (22) is a thread on the compressor shaft (16), onto which the inertia mass (20) is threaded.

7. The compressor as defined in claim 5 wherein the mechanical connection (22) is a splined connection.

8. The compressor as defined in claim 5 wherein the mechanical connection (22) is formed by a pin, a keying element or a spring.

9. The compressor as defined in any of the preceding claims wherein a fixation (24) is provided for securing the inertia mass (20)to the compressor shaft (16).

10. The compressor as defined in claim 9 wherein the fixation (24) is formed by a counter screw.

11. The compressor as defined in claim 9 wherein the fixation (24) is formed by an adhesive.

12. The compressor as defined in claim 9 wherein the fixation (24) is a mechanical formation such as a spring element, a pin, a tooth profile or a counter screw.

13. The compressor as defined in any of the preceding claims wherein the compressor shaft (16) extends through a hub (14) to which the drive pulley (12) is connected, the inertia mass (20) being arranged at the free end of the compressor shaft (16).

14. The compressor as defined in claim 13 wherein the inertia mass (20) is mechanically centered to the hub (14).

15. The compressor as defined in claim 14 wherein the inertia mass (20) has a shoulder (26) which engages at an associated surface of the hub (14).

16. The compressor as defined in an of the preceding claims wherein the inertia mass (20) has a rotational inertia of 200 to 800 kg*mm².
